**Europäisches Patentamt**

**European Patent Office**

**Office européen des brevets**

(11) Veröffentlichungsnummer : **0 361 539 B1**

(19)

(12) **EUROPÄISCHE PATENTSCHRIFT**

(45) Veröffentlichungstag der Patentschrift :
23.09.92 Patentblatt 92/39

(21) Anmeldenummer : **89121051.0**

(22) Anmeldetag : **29.11.86**

(51) Int. Cl.⁵ : **F25B 41/06,** F16K 31/04

(54) **Expansionsventil zum Steuern des Kältemittelstromes zu einem Verdampfer von Kälteanlagen bzw. Wärmepumpen.**

(30) Priorität : **22.01.86 DE 3601817**

(43) Veröffentlichungstag der Anmeldung :
**04.04.90 Patentblatt 90/14**

(45) Bekanntmachung des Hinweises auf die
Patenterteilung :
**23.09.92 Patentblatt 92/39**

(84) Benannte Vertragsstaaten :
**AT BE CH DE ES FR GB GR IT LI LU NL SE**

(56) Entgegenhaltungen :
**EP-A- 0 064 600
DE-A- 1 949 198
FR-A- 1 263 964
FR-A- 1 285 390
GB-A- 847 361
GB-A- 2 049 107
GB-A- 2 152 245
US-A- 2 117 182**

(56) Entgegenhaltungen :
**US-A- 3 194 533
US-A- 3 290 002
US-A- 3 521 853
US-A- 4 556 193**

(60) Veröffentlichungsnummer der früheren
Anmeldung nach Art. 76 EPü : **0 229 942**

(73) Patentinhaber : **Otto Egelhof GmbH & Co.
Stuttgarter Strasse 60
W-7012 Fellbach (DE)**

(72) Erfinder : **Gras, Horst
Schützhausweg 33/1
7442 Neuffen (DE)**
Erfinder : **Blaich, Herbert
Gleiwitzerstrasse 12
7012 Fellbach 4 (DE)**

(74) Vertreter : **Manitz, Gerhart, Dr. Dipl.-Phys. et al
MANITZ, FINSTERWALD & ROTERMUND
Seelbergstrasse 23/25
W-7000 Stuttgart 50 (DE)**

**EP 0 361 539 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung betrifft ein Expansionsventil zum Steuern des Kältemittelstromes zu einem Verdampfer von Kälteanlagen bzw. Wärmepumpen, mit einem durch einen Stellmotor steuerbaren Verschlußorgan sowie einem damit zusammenwirkenden Sitz, wobei das Verschlußorgan und der Sitz im Schließzustand des Expansionsventiles mit ringförmigen Dichtflächen aufeinandersitzen.

Entsprechende Expansionsventile sind aus der US-A 45 06 518 bzw. der US-A 45 56 193 bekannt. Dabei kann die Steuerung des Expansionsventiles mittels eines Rechners in Abhängigkeit von der Eingangs- sowie der Ausgangstemperatur am Verdampfer gesteuert werden, der dazu entsprechende, mit dem Rechner verbundene Temperaturfühler besitzen kann.

Aus der US-A 31 94 533 ist ein Nadelventil bekannt, bei dem das Verschlußorgan sowie der zugehörige Sitz im Schließzustand mit ringförmigen Dichtflächen aufeinandersitzen und am Verschlußorgan ein von der Dichtfläche des Verschlußorganes umschlossener zylindrischer Bereich angeordnet ist, welcher im Schließzustand in eine von der Dichtfläche des Sitzes umschlossene zylindrische Bohrung eintaucht, wobei die Durchmesser von zylindrischer Bohrung und zylindrischem Bereich nur geringfügig unterschiedlich sind, so daß bei teilweise geöffnetem Ventil eine deutliche und gut steuerbare Drosselwirkung eintritt.

Aufgabe der Erfindung ist es nun, ein Expansionsventil zu schaffen, welches eine besonders feinfühlige Steuerung des Kältemittelstromes ermöglicht und mit vergleichsweise geringem konstruktiven Aufwand hergestellt werden kann.

Diese Aufgabe wird erfindungsgemäß dadurch gelöst, daß am Verschlußorgan ein von der Dichtfläche des Verschlußorganes umschlossener zylindrischer Bereich angeordnet ist, welcher im Schließzustand in eine von der Dichtfläche des Sitzes umschlossene zylindrische Bohrung eintaucht, daß die Durchmesser von zylindrischer Bohrung und zylindrischem Bereich zur Verstärkung einer Drosselwirkung bei teilweise geöffnetem Expansionsventil nur geringfügig unterschiedlich sind, daß an dem zylindrischen Bereich ein konischer Bereich bzw. ein konusartiger Dorn anschließen, und daß der Stellmotor ein Gewindeteil treibt, welches in bzw. an einem stationären Gegengewindeteil angeordnet ist und mit dem Verschlußorgan bzw. einem dasselbe antreibenden Element ein Differential-Schraubgetriebe bildet.

Durch die erfindungsgemäße Ausbildung des Verschlußorganes wird der Vorteil erzielt, daß bei geringfügiger Öffnung des Ventiles, wenn die Dichtfläche des Verschlußorganes nur wenig von der zugehörigen Dichtfläche des Ventilsitzes abgehoben ist, eine ausgeprägte und durch axiale Verstellung des Verschlußorganes gut steuerbare Drosselwirkung auftritt. Des weiteren ist vorteilhaft, daß sich der Strömungsquerschnitt im Bereich zwischen dem Verschlußorgan und dem Ventilsitz in Strömungsrichtung nach Art einer Lavaldüse zunächst kontinuierlich verengt und sodann erweitert. Dadurch kann auch bei hohen Strömungsgeschwindigkeiten eine geräuscharme Strömung erreicht werden. Gleichzeitig wird eine gute Dichtigkeit des Ventiles in Schließstellung erreicht.

Durch die als Differential-Schraubgetriebe ausgebildete antriebsmäßige Verbindung zwischen Verschlußorgan und Stellmotor wird die Möglichkeit geschaffen, einerseits Gewinde großer Steilheit und großer Tragkraft zu verwenden und andererseits gleichwohl eine hohe Übersetzung zu erreichen, indem für einen relativ geringen Verstellhub des Verschlußorganes ein relativ großer Drehweg des Gewindeteiles bzw. der Spindel notwendig ist. Bei laufendem Stellmotor bewegen sich nämlich das Gewindeteil bzw. die Spindel relativ zum stationären Gegengewindeteil in der einen Richtung, während sich das Verschlußorgan relativ zum Gewindeteil bzw. zur Spindel in der anderen Richtung verschiebt, so daß sich der Verstellweg des Verschlußorganes als Differenz zwischen dem Verstellweg des Gewindeteiles relativ zum stationären Teil und dem Verstellweg des Verschlußorganes relativ zum Gewindeteil ergibt.

Gemäß einer vorteilhaften Ausführungsform der Erfindung ist vorgesehen, den Stellmotor in einem Gehäuse axial verschiebbar, jedoch undrehbar zu lagern und ein mit der Motorwelle direkt verbundenes Gewindeteil treiben zu lassen, welches über das Differential-Schraubgetriebe mit dem Verschlußorgan antriebsverbunden ist und in einem stationär angeordneten Gegengewindeteil schraubverschiebbar gelagert ist.

Des weiteren ist es unabhängig von den übrigen Konstruktionsmerkmalen zweckmäßig, wenn der Stellmotor in einem gas- und dampfdichten Gehäuse angeordnet ist, welches mit dem Ventilgehäuse dicht verbindbar ist. Auf diese Weise wird vermieden, daß in das Motorgehäuse Feuchtigkeit eindringen und dort gefrieren kann, wenn das Gehäuse und der Motor von dem das Expansions-ventil durchsetzenden Kältemittelstrom abgekühlt werden. Durch die gas- und dampfdichte Kapselung des Motors werden also Betriebsstörungen durch Eisbildung am Motor sicher vermieden.

Im übrigen wird hinsichtlich bevorzugter Merkmale der Erfindung auf die Ansprüche sowie die nachfolgenden Erläuterungen bevorzugter Ausführungsbeispiele anhand der Zeichnung verwiesen.

Dabei zeigt

Fig. 1 ein Blockschaltbild einer Wärmepumpe, bei der das erfindungsgemäße Expansionsventil eingesetzt wird,

Fig. 2 ein leicht schematisiertes Schnittbild eines bekannten Expansionsventiles zusammen mit dem zugehörigen Stellmotor,

Fig. 3 ein Schnittbild einer ersten Ausführungsform der Erfindung und

Fig. 4 ein Schnittbild einer weiteren Ausführungsform.

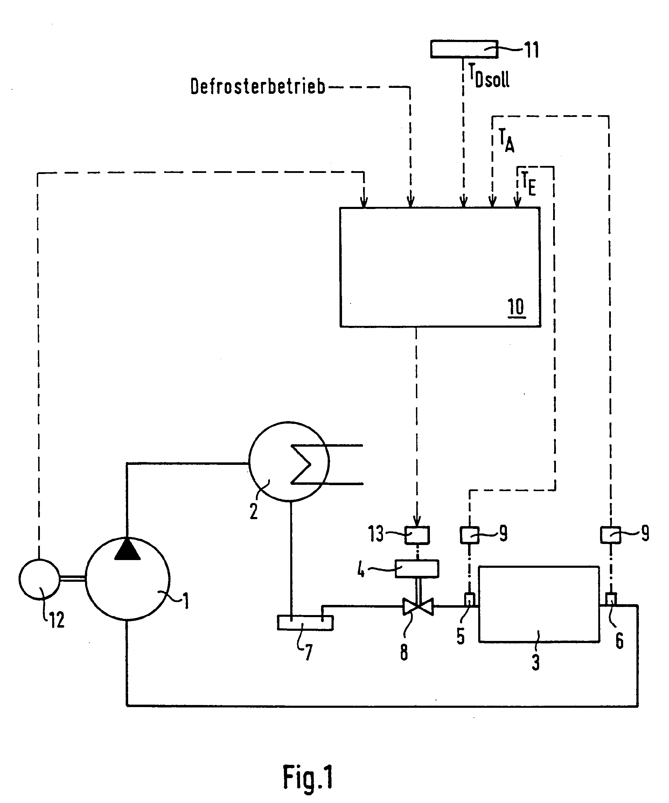

Gemäß Fig. 1 besteht die Kälteanlage im wesentlichen aus einem Kältemittelkreislauf mit einem Kompressor 1, einem druckseitig desselben angeordneten Kondensator 2 sowie einem saugseitig des Kompressors angeordneten Verdampfer 3, dessen Eingang mit dem Ausgang des Kondensators 2 über ein durch einen Stellmotor 4 gesteuertes Expansionsventil 8 sowie einen zwischen dasselbe und den Kondensator geschalteten Sammler 7 für kondensiertes Kältemittel verbunden ist.

Am Eingang und Ausgang des Verdampfers sind Temperaturfühler 5 und 6 angeordnet, die jeweils eine elektrische Spannung mit von der gemessenen Temperatur abhängigem Pegel erzeugen. Diese Spannungen werden mittels Analog-Digital-Wandler 9 in digitale Eingangssignale $T_E$ bzw. $T_A$ für einen Rechner 10 umgewandelt und demselben als Eingangssignale zugeleitet.

Der Rechner 10 erhält von einem ein- bzw. verstellbaren Sollwertgeber 11 Sollwerte $T_{Dsoll}$ für die Temperaturdifferenz $T_D = T_E-T_A$. Im übrigen kann der Sollwertgeber 11 gegebenenfalls auch weitere Sollwerte für besondere Betriebsphasen und/oder Schwellwerte - vorzugsweise veränderbar - vorgeben. Darüber hinaus besitzt der Rechner 10 bevorrechtigte Eingänge, welche zur Eingabe von Signalen dienen, die ihrerseits wiedergeben, ob der Motor 12 des Kompressors 1 läuft und/oder ob ein Defrosterbetrieb zum Abtauen des Verdampfers 3 eingeschaltet ist.

In Abhängigkeit von den Eingangssignalen steuert bzw. regelt der Rechner 10 den Stellmotor 4, indem entsprechende Ausgangssignale vom Rechner an eine dem Stellmotor 4 vorgeschaltete, dieselben steuernde Steuerelektronik 13 gegeben werden.

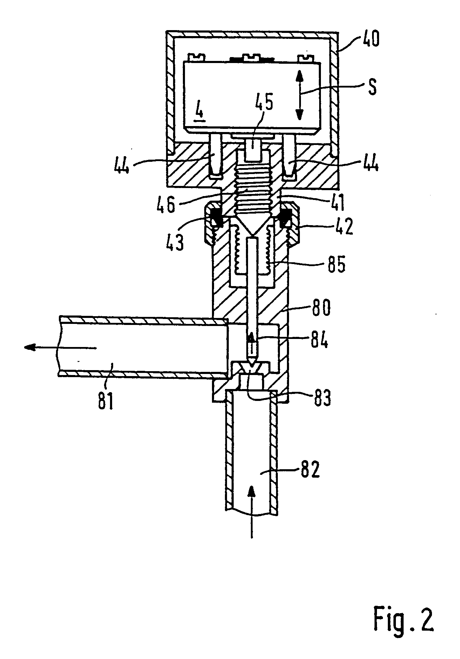

Das in Fig. 2 dargestellte Expansionsventil 8 besitzt ein Ventilgehäuse 80 mit einem mit dem Sammler 7 (vgl. Fig. 1) verbundenen Eingang 82 sowie einem zum Verdampfer 3 führenden Ausgang 81, wobei die Eingangs- und die Ausgangsleitung wie dargestellt, einen etwa rechten Winkel bilden. Zwischen Eingang 82 und Ausgang 81 ist eine düsenförmige Öffnung 83 angeordnet, deren Öffnungsquerschnitt mittels eines nadelartigen Verschlußorgans 84 steuerbar und gegebenenfalls vollständig absperrbar ist. Das Verschlußorgan 84 ist in einer zur Eingangsleitung etwa gleichachsigen Bohrung des Ventilgehäuses 80 verschiebbar gelagert und auf der Außenseite dieser Bohrung mittels eines Balges 85 nach außen abgedichtet, welcher einerseits mit dem Verschlußorgan 84 und andererseits mit dem Ventilgehäuse 80 dicht verbunden ist. Das Verschlußorgan 84 durchsetzt den Balg 85, derart, daß ein von der Öffnung 83 abgewandtes Ende des Verschlußorganes 84 zur Verstellung desselben zugänglich ist. Der Stellmotor 4 ist in einem Gehäuse 40 angeordnet, welches mittels eines Stutzens 41 sowie einer Überwurfmutter 42 sowie unter Zwischenschaltung einer Dichtung 43 in der dargestellten Weise in Verlängerung des Verschlußorganes 84 angeordnet ist. Das Gehäuse 40 ist zweckmäßigerweise gas- und dampfdicht ausgebildet, so daß keinerlei Feuchtigkeit eindringen und gegebenenfalls vereisen kann, wenn das Gehäuse 40 entsprechend dem Ventilgehäuse 80 abkühlt.

Innerhalb des Gehäuses 40 ist der Stellmotor 4 undrehbar jedoch axial entsprechend dem Doppelpfeil S verschiebbar gelagert, indem ein oder zwei am Motor angeordnete Zapfen 44 verschiebbar in Sackbohrungen eines Bodens des Gehäuses 40 verschiebbar eingesetzt sind. Die Abtriebswelle 45 des Motors 4 ist unmittelbar mit einer Schraubspindel 46 verbunden, welche in einem Gegengewinde innerhalb des Stutzens 41 schraubverschiebbar angeordnet ist. Bei Drehung der Schraubspindel 46 durch den Motor 4 bewegen sich also die Spindel 46 sowie der Motor 4 entsprechend dem Doppelpfeil S nach oben oder nach unten, wobei das an der Spitze der Schraubspindel 46 anliegende Verschlußorgan 84 eine entsprechende Bewegung unter Veränderung des freien Querschnittes der Öffnung 83 ausführt.

Zweckmäßigerweise ist die Steuerelektronik (nicht dargestellt) des Motors 4 am oder im Gehäuse 40 untergebracht, so daß keinerlei zusätzliche Schnittstellenschaltungen angeordnet werden müssen, um die digitalen Ausgangssignale des Rechners 10 in zur Steuerung des Motors 4 geeignete Stellsignale umzusetzen.

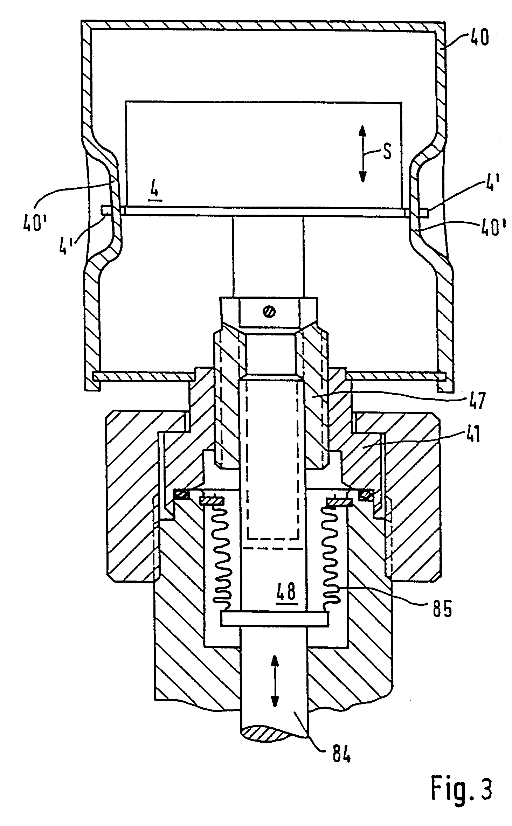

Eine erste Ausführungsform der Erfindung ist in Fig. 3 gezeigt. Sie entspricht weitgehend der Konstruktion, wie sie in Fig. 2 dargestellt ist. Der Stellmotor 4 wird in Pfeilrichtung S heb- und senkbar, jedoch undrehbar geführt, indem am Gehäuse 40 zumindest eine Ausbuchtung in Form einer vertikalen Rippe 40′ angeordnet ist, welche mit Führungsnocken 4′ od.dgl. am Stellmotor 4 zusammenwirken. Im Unterschied in Fig. 2 ist anstelle der Schraubspindel 46 eine Schraubhülse 47 vorgesehen, welche ein Außen- sowie ein Innengewinde aufweist. Mit dem Außengewinde ist die Hülse 47 in gleicher Weise wie die Schraubspindel 46 im Stutzen 41 schraubverschiebbar geführt. Das Innengewinde besitzt eine dem Außengewinde entsprechende Drehrichtung, d.h. Außen- und Innengewinde sind beide entweder rechts- oder linksgängig, wobei die Steilheit des Innengewindes von der Steilheit des Außengewindes abweicht. Das Innengewinde wirkt mit einer Gewindestange 48 zusammen, die als Teil des Verschlußorgans 84 bzw. mit demselben fest verbunden angeordnet ist. Diese Gewindestange 48 wird mittels des Balges 85 zusammen mit dem Verschlußorgan 84 undrehbar, jedoch axial verschiebbar gehalten.

Aufgrund der beschriebenen Gewindeanordnung bewegt sich beispielsweise die Schraubhülse 47 bei laufendem Stellmotor 4 relativ zum Stutzen 41 in Abwärtsrichtung, während sich die Gewindestange 48 relativ zur Schraubhülse 47 in Aufwärtsrichtung bewegt. Damit ergibt sich der Verstellweg des Verschlußorgans 84 als Differenz zwischen dem Verstellweg der Schraubhülse 47 relativ zum Stutzen 41 und dem Verstellweg der Gewindestange 48 relativ zur Schraubhülse 47. Damit wird die Möglichkeit geschaffen, Gewinde großer Steilheit und großer Tragkraft zu verwenden; gleichwohl kann eine hohe Übersetzung erreicht werden, d.h. für einen relativ geringen Verstellhub des Verschlußorganes 84 ist ein relativ großer Drehhub des Stellmotors 4 notwendig.

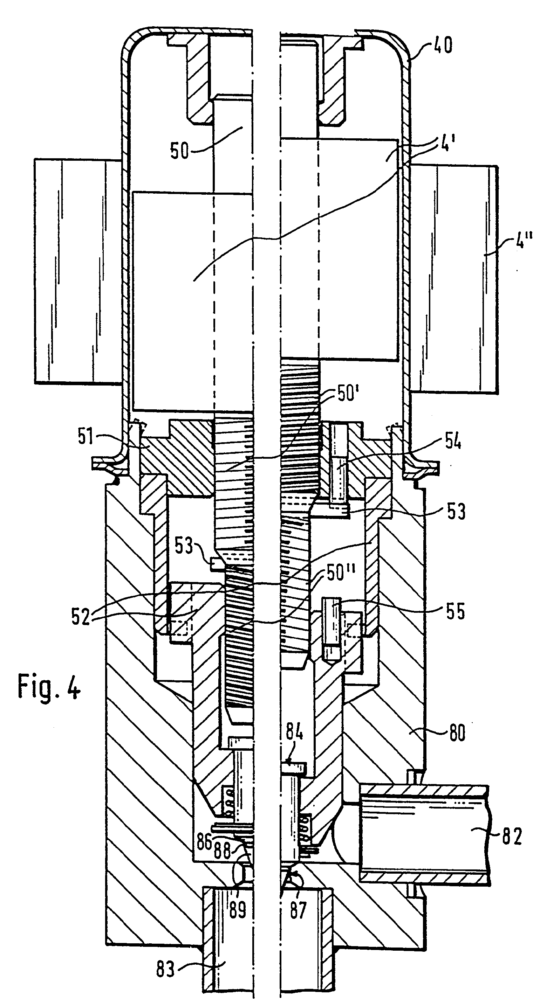

Bei dem in Fig. 4 dargestellten Zweiter Ausführungsbeispiel des erfindungsgemäßen Expansionsventils umschließt das Gehäuse 40 lediglich den Rotor 4′ des Stellmotors 4, während der Stator 4″ desselben außen auf dem Gehäuse 40 angeordnet ist. Um die für einen Elektromotor notwendige magnetische Kopplung zwischen Rotor 4′ und Stator 4″ zu gewährleisten, muß bei dieser Ausführungsform das Gehäuse 40 aus einem nicht magnetisierbaren Material bestehen.

Das Gehäuse 40 bildet zusammen mit dem Ventilgehäuse 80 eine gasdichte Kapsel, welche mit dem Eingang 82 des Ventilgehäuses 80 und damit mit dem Kältemittelsystem in Verbindung steht, d.h. innerhalb der genannten Kapsel herrscht praktisch der gleiche Druck wie am Eingang 82. Bei dieser Anordnung wird der Vorteil erreicht, daß der Stellmotor 4 nicht gegen den Druck des Kältemittelsystems arbeiten muß. Die auf das Verschlußorgan 84 in Öffnungs- und Schließrichtung wirkenden, vom Druck des Kältemittels verursachten Kräfte kompensieren sich nämlich weitestgehend gegenseitig. Dementsprechend genügt ein Stellmotor 4 mit geringer Leistung. Des weiteren wird bei dieser Anordnung der Vorteil erzielt, daß in die vom Gehäuse 40 sowie dem Ventilgehäuse 80 gebildeten Kapsel keinerlei elektrische Leitungen eingeführt werden müssen.

Der in der Kapsel untergebrachte Rotor 4′ sowie die zur antriebsmäßigen Verbindung desselben mit dem Verschlußorgan 84 dienenden Elemente können mit einer Dauerschmierung versehen sein, so daß sich jegliche zusätzliche Schmierung während der Lebensdauer des Kältemittelsystems erübrigt. Im übrigen enthalten die Kältemittel normalerweise auch Öl zur ständigen Schmierung des Kompressors 1. Dieses Öl dringt zusammen mit dem Kältemittel auch in die vom Gehäuse 40 und dem Ventilgehäuse 80 gebildeten Kapsel ein, so daß auch auf diese Weise eine ausreichende Schmierung gewährleistet werden kann.

Die Welle 50 des Rotors 4′ ist an ihrem in der Zeichnung oberen Ende lediglich radial und damit axial verschiebbar gelagert. Unterhalb des Rotors 4′ ist die Welle 50 mit einem Gewinde 50′ in einer entsprechenden Gewindebohrung eines feststehenden Lagerteiles 51 gelagert, so daß sich die Welle 50 und der Rotor 4′ bei Drehung in axialer Richtung nach oben oder unten verschieben, je nach Drehsinn. Unterhalb des Gewindeabschnittes 50′ ist ein weiterer Gewindeabschnitt 50″ angeordnet, dessen Steigung größer ist als diejenige des Gewindeabschnittes 50′.

Der Gewindeabschnitt 50″ wirkt mit dem Innengewinde eines Hülsenteiles 52 zusammen, welches undrehbar, jedoch axial verschiebbar im Ventilgehäuse 80 geführt ist. Dieses Hülsenteil 52 trägt an seinem unteren Ende das Verschlußorgan 84, welches im Hülsenteil 52 teleskopartig geführt und mittels einer Feder (in der Zeichnung nach unten) beaufschlagt ist. Wenn die Welle 50 in einer Drehrichtung rotiert, bei der eine Axialverschiebung der Welle 50 und des Rotors 4′ nach unten erfolgt, so bewegt sich das Hülsenteil 52 zusammen mit dem Verschlußorgan 84 nach oben, d.h. das Ventil öffnet. Bei umgekehrter Drehrichtung des Rotors 4′ bewegt sich das Hülsenteil 52 mit dem Verschlußorgan 84 zur Schließung des Ventiles nach unten.

In der rechten Hälfte der Fig. 4 ist die Schließlage dargestellt, während die linke Hälfte eine Öffnungslage zeigt.

An der Welle 50 ist ein Zapfen 53 radial angeordnet, welcher mit parallel zur Welle 50 angeordneten Anschlagzapfen 54 bzw. 55 am Lagerteil 51 bzw. am Hülsenteil 52 zusammenwirkt, wenn das Ventil vollständig geöffnet bzw. geschlossen ist. Damit wird vermieden, daß sich die Gewinde der Welle 50 sowie des Lagerteiles 51 bzw. des Hülsenteiles 52 verkeilen können oder außer Eingriff geraten. Gegebenenfalls können die Anschlagzapfen 54 bzw. 55 mehrfach angeordnet sein.

Das Verschlußorgan 84 besitzt eine ringförmige, nach Art eines Kegelstumpfmantels ausgebildete Dichtfläche 86, die mit einer entsprechend ausgebildeten Dichtfläche des Ventilsitzes 87 zusammenwirkt. An die Dichtfläche 86 schließt sich nach unten ein zylindrischer Abschnitt 88 an, welcher einen geringfügig geringeren Durchmesser als die an die Dichtfläche des Ventilsitzes 87 nach unten anschließende zylindrische Bohrung hat. Die axiale Länge des zylindrischen Abschnittes 88 ist, wie dargestellt, deutlich geringer als die axiale Länge der genannten zylindrischen Bohrung. Nach unten wird der zylindrische Abschnitt 88 durch einen Konus 89 fortgesetzt. Die beschriebene Ausbildung von Verschlußorgan 84 und Ventilsitz 87 ist deshalb vorteilhaft, weil bei geringfügiger Öffnung des Ventiles, wenn die Dichtfläche 86 des Verschlußorgans 84 nur wenig von der zugehörigen Dichtfläche des Ventilsitzes 87 abgehoben hat, eine ausgeprägte und durch axiale Verstellung des Verschlußorgans 84 gut steuerbare Drosselwirkung auftritt. Des weiteren ist vorteilhaft, daß sich der Strömungsquerschnitt im Bereich zwischen dem Verschlußorgan 84 und dem Ventilsitz 86 in Strömungsrichtung nach Art einer Lavaldüse zunächst kontinuierlich verengt und sodann kontinuierlich erweitert. Dadurch kann auch bei hohen Strömungsgeschwindigkeiten eine geräuscharme Strömung erreicht werden. Außerdem wird aufgrund der großen Dichtflächen von Verschlußorgan 84 und Ventilsitz 87 eine hohe Dichtigkeit des Ventiles in Schließlage gewährleistet.

**Patentansprüche**

1. Expansionsventil zum Steuern des Kältemittelstromes zu einem Verdampfer (3) von Kälteanlagen bzw. Wärmepumpen, mit einem durch einen Stellmotor (4) steuerbaren Verschlußorgan (84) sowie einem damit zusammenwirkenden Sitz (87) od.dgl., wobei das Verschlußorgan (84) und der Sitz (87) im Schließzustand des Expansionsventiles mit ringförmigen Dichtflächen (86) aufeinandersitzen,
dadurch gekennzeichnet,
daß am Verschlußorgan (84) ein von der Dichtfläche (86) des Verschlußorganes (84) umschlossener zylindrischer Bereich (88) angeordnet ist, welcher im Schließzustand in eine von der Dichtfläche des Sitzes (87) umschlossene zylindrische Bohrung eintaucht,
daß die Durchmesser von zylindrischer Bohrung und zylindrischem Bereich (88) zur Verstärkung einer Drosselwirkung bei teilweise geöffnetem Expansionsventil nur geringfügig unterschiedlich sind,
daß an dem zylindrischen Bereich (88) ein konischer Bereich (89) bzw. ein konusartiger Dorn anschließen, und daß der Stellmotor (4) ein Gewindeteil (47) treibt, welches in bzw. an einem stationären Gegengewindeteil (41) angeordnet ist und mit dem Verschlußorgan (84) bzw. einem dasselbe antreibenden Element ein Differential-Schraubgetriebe bildet .

2. Expansionsventil nach Anspruch 1,
dadurch gekennzeichnet, daß die Dichtflächen (86) kegelig ausgebildet sind.

3. Expansionsventil nach einem der Ansprüche 1 oder 2,
dadurch gekennzeichnet, daß der Stellmotor (4) in einem Gehäuse (40) axial verschiebbar, jedoch undrehbar gelagert und daß das Gewindeteil direkt mit der Motorwelle verbunden ist.

4. Expansionsventil nach einem der Ansprüche 1 bis 3,
dadurch gekennzeichnet, daß das Verschlußorgan (84) des Expansionsventiles mittels Balges (85) nach außen abgedichtet ist und der Stellmotor (4) zusammen mit dem das Verschlußorgan (84) betätigenden Gewindeteil als demontierbare Einheit am Ventilgehäuse (80) anbringbar ist.

5. Expansionsventil nach nach einem der Ansprüche 1 bis 4,
dadurch gekennzeichnet, daß der Stellmotor (4) in einem gas- und dampfdichten Gehäuse (40) angeordnet ist, welches mit dem Ventilgehäuse (80) gas- und dampfdicht verbindbar ist.

6. Expansionsventil nach einem der Ansprüche 1 bis 5,
dadurch gekennzeichnet, daß eine als Schnittstelle zwischen einem das Expansionsventil steuernden Rechner (10) und dem Stellmotor (4) angeordnete Steuerelektronik (13) im bzw. am Gehäuse (40) des Stellmotors (4) untergebracht ist.

7. Expansionsventil nach einem der Ansprüche 1 bis 6,
dadurch gekennzeichnet, daß als Stellmotor ein elektrischer Schrittmotor zur inkrementalen Änderung des Öffnungsgrades angeordnet ist.

8. Expansionsventil nach Anspruch 7,
dadurch gekennzeichnet, daß der Schrittmotor zweiphasig bipolar ist.

9. Expansionsventil nach einem der Ansprüche 1 bis 8,
dadurch gekennzeichnet, daß das Expansionsventil zusammen mit dem Rotor (4′) eines als Stellmotor (4) angeordneten Elektromotors und der Antriebsverbindung zwischen Rotor (4′) und Verschlußorgan (84) des Expansionsventiles in einem Gehäuse (40) gas- und dampfdicht gekapselt ist, dessen Innenraum mit dem vom Expansionsventil gesteuerten Kältemittelsystem verbunden ist, und daß der Stator (4″) des Elektromotors (4) außen auf dem Gehäuse (40) auf einem den Rotor (4′) umschließenden Gehäuseabschnitt aus nichtmagnetisierbarem Material angeordnet ist.

**Claims**

1. Expansion valve for controlling the refrigerant flow to an evaporator (3) of refrigeration plants or heat pumps, comprising a closure member (84) controllable by means of a positioning motor (4) and a seat (87) or similar cooperating with the closure member, wherein the closure member (84) and the seat (87) seat against each other via annular-shaped sealing surfaces (86) in the closed state of the expansion valve, characterised in that a cylindrical region (88) surrounded by the sealing surface (86) of the closure member (84) is arranged on the closure member (84), which region penetrates in the closed state into a cylindrical bore surrounded by the sealing surface of the seat (87); in that the diameters of the cylindrical bore and of the cylindrical region (88) differ only slightly in order to enhance a throttling effect when the expansion valve is partly opened; in that a conical region (89) or a cone-shaped prong follows the cylindrical region (88); and in that the positioning motor (4) drives a threaded part (47) which is arranged in or on a stationary counter-threaded part (41) and forms a differential screw drive together with the closure member (84) or an element which drives the latter.

2. Expansion valve according to claim 1, characterised in that the sealing surfaces (86) are realised conically shaped.

3. Expansion valve according to either one of claims 1 or 2, characterised in that the positioning motor (4) is axially displaceably but non-rotatably mounted in a housing (40); and in that the threaded part is directly connected to the motor shaft.

4. Expansion valve according to any one of claims 1 to 3, characterised in that the closure member (84) of the expansion valve is sealed towards the exterior by means of bellows (85); and in that the positioning motor (4) can be mounted on the valve housing (80) together with the threaded part which actuates the closure member (84) as a removable unit.

5. Expansion valve according to any one of claims 1 to 4, characterised in that the positioning motor (4) is arranged in a gas and vapour tight housing (40) which can be connected to the valve housing (80) in a gas and vapour tight manner.

6. Expansion valve according to any one of claims 1 to 5, characterised in that an electronic control system (13) is arranged as an interface between a calculator (10) which controls the expansion valve and the positioning motor (4) and is accommodated in or on the housing (40) of the positioning motor (4).

7. Expansion valve according to any one of claims 1 to 6, characterised in that an electrical stepping motor is provided as positioning motor in order to incrementally modify the degree of opening.

8. Expansion valve according to claim 7, characterised in that the stepping motor is of the two-phase bipolar type.

9. Expansion valve according to any one of claims 1 to 8, characterised in that the expansion valve is encapsulated in a gas and vapour tight manner in a housing (40) together with the rotor (4′) of an electrical motor provided as positioning motor (4) and with the drive connection between the rotor (4′) and the closure member (84) of the expansion valve, the inner space of said housing being connected to the refrigerant system controlled by the expansion valve; and in that the stator (4″) of the electrical motor (4) is mounted externally on the housing (40) on a portion of the housing made of non-magnetic material and enclosing the rotor (4′).

**Revendications**

1. Soupape d'expansion pour la régulation d'écoulement de réfrigérant vers un évaporateur (3) d'installation frigorifique ou de pompe à chaleur, comprenant un organe de fermeture (84) commandé par un moteur de positionnement (4) et un siège (87) ou similaire qui coopère avec ledit organe de fermeture, l'organe de fermeture (84) et le siège (87) étant en contact mutuel via des surfaces d'étanchéité annulaires (86) dans la condition de fermeture de la soupape, caractérisée en ce qu'une région cylindrique (88) entourée par la surface d'étanchéité (86) de l'organe de fermeture (84) est agencée sur l'organe de fermeture (84), cette région pénétrant, dans la condition de fermeture, dans un perçage cylindrique entouré par la surface d'étanchéité du siège (87), en ce que les diamètres du perçage cylindrique et de la région cylindrique (88) ne diffèrent que faiblement afin de renforcer un effet d'étranglement lorsque la soupape est seulement partiellement ouverte, en ce que la région cylindrique (88) est suivie d'une région conique (89) ou d'une pointe en forme de cône, et en ce que le moteur de positionnement (4) entraîne une partie filetée (47) qui est prévue dans ou sur une contre-partie filetée (41) stationnaire et forme un entraînement différentiel à vis avec l'organe de fermeture (84) ou avec un élément qui entraîne celui-ci.

2. Soupape d'expansion selon la revendication 1, caractérisée en ce que les surfaces d'étanchéité (86) sont tronconiques.

3. Soupape d'expansion selon l'une ou l'autre des revendications 1 et 2, caractérisée en ce que le moteur de positionnement (49 est monté dans un boîtier (40) de manière à pouvoir se déplacer axialement mais sans pouvoir tourner, et en ce que la partie filetée est directement reliée à l'arbre de moteur.

4. Soupape d'expansion selon l'une quelconque des revendications 1 à 3, caractérisée en ce que l'organe de fermeture (84) de la soupape est étanché vis-à-vis de l'extérieur au moyen d'un soufflet (85) et en ce que le moteur de positionnement (4) peut être monté sur le boîtier de soupape (80) sous la forme d'une unité démontable ensemble avec la partie filetée qui actionne l'organe de fermeture (84).

5. Soupape d'expansion selon l'une quelconque des revendications 1 à 4, caractérisée en ce que le moteur de positionnement (4) est agencé dans un boîtier (40) étanche aux gaz et aux vapeurs, qui peut être raccordé au boîtier de soupape (80) d'une manière étanche aux gaz et aux vapeurs.

6. Soupape d'expansion selon l'une quelconque des revendications 1 à 5, caractérisée en ce qu'une unité électronique de commande, agencée comme interface entre un calculateur (10) qui commande la soupape d'expansion et le moteur de positionnement (4), est logée dans ou sur le boîtier (40) du moteur de positionnement (4).

7. Soupape d'expansion selon l'une quelconque des revendications 1 à 6, caractérisée en ce qu'il est prévu en tant que moteur de positionnement un moteur électrique pas-à-pas afin de modifier le degré d'ouverture par incréments.

8. Soupape d'expansion selon la revendication 7, caractérisée en ce que le moteur pas-a-pas est du type biphasé bipolaire.

9. Soupape d'expansion selon l'une quelconque des revendications 1 à 8, caractérisée en ce que la soupape d'expansion est enfermée de façon étanche aux gaz et aux vapeurs dans un boîtier (40) ensemble avec le rotor (4') d'un moteur électrique prévu comme moteur de positionnement (4) et avec la liaison d'entraînement entre le rotor (4') et l'organe de fermeture (84) de la soupape, le volume intérieur dudit boîtier (40) étant relié au système réfrigérant commandé par la soupape d'expansion, et en ce que le stator (4″) du moteur électrique (4) est monté à l'extérieur sur le boîtier (40) sur une section de boîtier en matériau non-magnétique qui entoure le rotor (4').

Fig.1

Fig.2

Fig. 3

Fig. 4